# EUROPEAN PATENT APPLICATION

(11) **EP 1 433 871 A1**
(43) Date of publication of application: **30.06.2004**
(21) Application number: 03256467.6
(22) Date of filing: 14.10.2003
(51) Int. Cl.: C23C 10/18, C23C 16/06, C23C 16/22, C23C 18/08, C23C 28/02, A01N 59/16, C23C 30/00

(54) **Method of providing antibacterial activity on a surface of a body using nano-sized metal particles**

(30) Priority: 23.12.2002 KR 2002082682
(71) Applicant: Samsung Electronics Co., Ltd., Suwon City, Kyungki-do (KR)
(72) Inventor: Park, Chan-Jung, Suwon City, Kyungki-Do (KR); Kim, Young-Saeng, Boopyung-Gu, Incheon-City (KR)
(74) Representative: Robinson, Ian Michael

(57) **Abstract**

A method of providing antibacterial activity to a body using nano-sized metal particles. The method of the present invention includes coating a colloidal solution formed by dissolving the nano-sized metal particles in a volatile solution onto a surface of the body, and thermally treating the coated body, whereby the nano-sized metal particles are deposited onto the body.

## Description

The present invention relates, in general, to methods of providing antibacterial activity to a body.

As well known to those skilled in the art, home appliances requiring sanitation and cleanliness are exemplified by refrigerators, washing machines, vacuum cleaners, electric fans, drying machines, air conditioners, electric pots, rice cookers, dishwashing machines, dish drying machines, microwave ovens, mixers, VTRs, televisions, etc.

In general, with the aim of providing antibacterial activity to the above appliances, methods have been used of heating the appliances at high temperatures or of adding chemicals to the appliances.

However, when being heated, the appliances may be deformed and consequently are not heated at temperatures which are sufficiently high enough to exhibit antibacterial activity.

Additionally, when the appliances are treated with the chemicals, it is difficult to maintain an antibacterial effect. In particular, in case of cooking appliances, the used chemicals have a negative effect on food safety.

In order to solve the problems related to treatment of the appliances by heating or chemicals, Japanese Patent Laid-open Publication No. 2000-159898 discloses a method of fabricating a body having antibacterial activity for use in home appliances, by directly incorporating metal particles having antibacterial activity into a resin. The reason why the metal particles are used is that metal ions, in particular, silver (Ag) ions, function to kill all bacteria while being harmless to the environment and to human beings. In other words, silver particles function to deactivate enzymes essential for metabolism of bacteria.

That is, the metal particles having antibacterial activity are incorporated into the resin, for example, polyolefin, and then melted together, to form the body having antibacterial activity suitable for use in home appliances, whereby a body requiring antibacterial activity has desired antibacterial activity. In addition, the formed body is not infected or discolored by bacteria or molds, and the value of the body as a commercial product is not decreased.

However, the above method is disadvantageous in that the metal particles are non-uniformly dispersed in the body or are contained in small amounts into the body, and thus antibacterial activity is not obtained at a desired level.

In order to have sufficient antibacterial activity, the body contains large amounts of the metal particles, and the metal particles should be exposed in abundance on the surface of the body. As such, however, antibacterial efficiency is relatively low in comparison with the amount of the used metal particles, and the formed body may be discolored due to the metal compounds incorporated into the resin. Accordingly, an external appearance of the body becomes inferior, and value thereof as a commercial product is decreased.

One aim of at least preferred embodiments of the present invention is to provide a method of providing anti-bacterial activity to a body, but which avoids high temperatures or the additional of detrimental chemicals.

According to the present invention there is provided an apparatus and method as set forth in the appended claims. Preferred features of the invention will be apparent from the dependent claims, and the description which follows.

The present invention provides anti-bacterial activity to a body by using nano-sized metal particles and, more particularly, to a method of depositing nano-sized metal particles onto a body, characterized in that the nano-sized metal particles are dissolved in a volatile solution, to form a colloidal solution, which is coated onto a surface of the body, and then the coated body is thermally treated.

One aspect of the present invention provides a method of providing antibacterial activity to a body by coating nano-sized antibacterial metal particles, capable of providing a large surface area of antibacterial function even though small amounts of the metal particles are used, onto a surface of the body for use in home appliances.

In one aspect of the present invention there is provided a method of providing antibacterial activity to a surface of a body by use of nano-sized metal particles, including coating a volatile solution dispersed with nano-sized metal particles onto the surface of the body, and thermally treating the coated body, whereby the nano-sized metal particles having antibacterial activity are deposited onto the body.

The method further includes drying the coated body before thermally treating the body coated with the nano-sized metal particles.

In addition, it is preferred that the thermal treatment operation is performed at 50-150°C to prevent deformation of the body.

More preferably, the thermal treatment operation is performed at 150°C.

The nano-sized metal particles used for the coating operation are used in an amount of 100-2000 ppm, based on the volatile solution.

Preferably, the nano-sized metal particles used for the coating operation are used in the amount of 1000 ppm, based on the volatile solution.

The nano-sized metal particles have a sterilizing function.

Particularly, the metal particles having the sterilizing function are any one selected from the group consisting of silver (Ag), aluminum (Al), copper (Cu), iron (Fe), zinc (Zn), cadmium (Cd), palladium (Pd), rhodium (Rh) and chrome (Cr).

Also, the body is suitable for use in home appliances, such as refrigerators, washing machines, and air conditioners.

In particular, the body is a filter for air cleaners.

Further, refrigerators, washing machines, and air conditioners including the body fabricated by the method of the present invention are provided.

For a better understanding of the invention, and to show how embodiments of the same may be carried into effect, reference will now be made, by way of example, to the accompanying diagrammatic drawings in which:

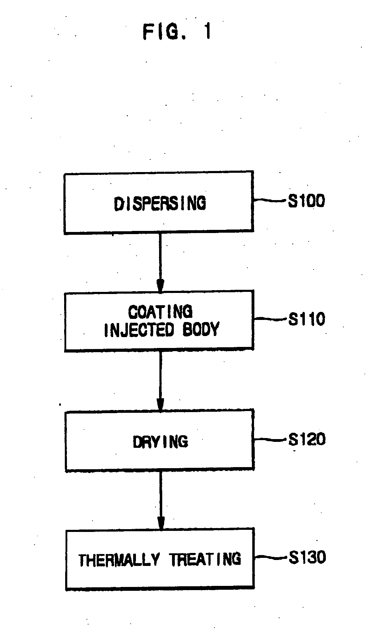

Figure 1 is a flow chart illustrating a process of providing antibacterial activity to a surface of a body by use of nano-sized metal particles according to an embodiment of the present invention.

As shown in Figure 1, a preferred method of the present invention includes dispersing nano-sized metal particles into a solution in operation 100, coating the solution dispersed with the nano-sized metal particles onto the body in operation 110, drying the coated body in operation 120, and thermally treating the coated or dried body in operation 130.

### Dispersing Nano-Sized Metal Particles Into A Solution In Operation 100

In operation 100, nano-sized metal particles are added into a dispersing medium and dispersed therein. The dispersing medium is exemplified by a volatile solution, such as water or ethanol.

The nano-sized metal particles have an average particle size of 500 nm or smaller, preferably 300 nm or smaller, and more preferably 3-250 nm.

The nano-sized metal particles of the present invention, which have antibacterial activity, are selected from the group consisting of silver (Ag), aluminum (Al), copper (Cu), iron (Fe), zinc (Zn), cadmium (Cd), palladium (Pd), rhodium (Rh) and chrome (Cr). The metal particles may be used alone or as alloys thereof. In particular, silver (Ag) ions are known to function to kill all bacteria while being innocuous to the environment and human beings. Thus, as the nano-sized metal particles, silver (Ag) is preferably used.

Meanwhile, the nano-sized metal particles of the present invention may be blended with non-metal particles. However, in such a case, antibacterial activity is decreased. In Table 1, there are shown the results of Halo test measuring antibacterial activities of only silver (Ag) particles and a mixture of silver (Ag) and sulfur (S) particles using *Escherichia coli* ATCC 25922 and *Staphylococcus aureus* ATCC 6538 strains.

*Escherichia coli* ATCC 25922, which is low in heat resistance, is sterilized when being heated at 60°C for about 20 min. *Escherichia coli* is a bacillus having both round-shaped ends with a length of 2-4 µm and a width of 0.4-0.7 µm, and is motile due to the presence of flagella. Also, *Escherichia coli* does not make spores and is a gram-negative bacterium. *Staphylococcus aureus* ATCC 6538 strains, belonging to the family Micrococcaceae, are gram-positive facultative anaerobic cocci (0.8-1.0 µm across) which form small spherical cells often arranged in irregular clusters when being observed by a microscope, and are classified into 23 species 4 subspecies. In particular, *Staphylococcus aureus* is an important bacterium causing various infections including food poisoning, and other bacteria of the family *Micrococcaceae* are opportunistic infection bacteria.

**TABLE 1**

| Test Strain | Amount (ppm) | Coated Body | Halo (mm) | |
|---|---|---|---|---|
| | | | Ag | Ag + S |
| *Escherichia coli* ATCC 25922 | 100 | Copper | 1.0 | 0.0 |
| | | Stainless | 0.0 | 0.0 |
| | 500 | Copper | 1.0 | 1.0 |
| | | Stainless | 1.5 | 0.5 |
| *Staphylococcus aureus* ATCC 6538 | 100 | Copper | 1.5 | 1.5 |
| | | Stainless | 0.0 | 0.0 |
| | 500 | Copper | 3.5 | 1.0 |
| | | Stainless | 1.0 | 0.5 |

In addition, the nano-sized metal particles are used in the amount of 100-2000 ppm, based on the volatile solution. If the amount of the metal particles is smaller than 100 ppm, water is used in relatively large amounts, and thus a period of time required to remove the water becomes long. Further, antibacterial activity is not sufficiently exhibited. On the other hand, if the amount exceeds 2000 ppm, antibacterial activity is not drastically decreased but the metal particles are not uniformly deposited onto the surface of the body. Also, the surface of the body may be discolored and cost required to prepare the body having antibacterial activity may increase. Table 2, below, shows the results of a Halo test according to the amounts of the used strains.

**TABLE 2**

| Test Strain | Amount (ppm) | Halo (mm) |
|---|---|---|
| *Escherichia coli* ATCC 25922 | 100 | 1.5 |
| | 500 | 1.5 |
| | 1000 | 1.5 |
| | 1500 | 1.5 |
| | 2000 | 1.5 |
| *Staphylococcus aureus* ATCC 6538 | 100 | 2.0 |
| | 500 | 2.0 |
| | 1000 | 2.5 |
| | 1500 | 2.5 |
| | 2000 | 2.5 |

The body having antibacterial activity according to the method of the present invention is suitable for use in various home appliances requiring antibacterial activity, which are exemplified by refrigerators, washing machines, vacuum cleaners, electric pans, drying machines, air conditioners, electric pots, rice cookers, dishwashing machines, dish drying machines, microwave ovens, mixers, VTRs, televisions, etc.

### Coating Nano-Sized Metal Particles Dispersed Solution Onto A Body In Operation 110.

In operation 110, a colloidal solution formed by dispersing the nano-sized metal particles into the volatile solution is sprayed onto the surface of the body, or the body is immersed in the colloidal solution.

### Drying The Coated Body In Operation 120

In operation 120, the coated body is naturally dried to shorten a period of time required to perform the next thermal treatment operation or to efficiently perform the thermal treatment operation. The drying operation may be omitted to immediately heat the coated body.

### Thermally Treating The Coated or Dried Body In Operation 130

In operation 130, the body which is coated with the nano-sized metal particles dispersed solution in operation 110, or dried in operation 120, is thermally treated in an oven. Through the thermal treatment, the nano-sized metal particles are deposited onto the body.

However, when the body is thermally treated at too high a temperature, the surface of the body is deformed and an external appearance thereof may be degraded. Thus, it is preferable that the thermal treatment operation is performed at 50-150°C to prevent deformation of the body. Table 3, later herein, shows the Halo according to the amounts of the used strains and thermal treatment temperatures.

In the thermal treatment operation, high oven temperature results in increasing electricity costs as well as treatment cost for heat resistance. When being subjected to a nano-coating process at 150°C or higher, a body or a filter is thermally deformed and thus may be damaged.

In addition, as the method of depositing the nano-sized metal particles to the body, there is an ion-adsorption reduction method, in which only the silver component is selectively attached onto a desired body by use of electrolysis of silver solution. However, the ion-adsorption reduction method suffers from disadvantages in terms of non-uniform coated surface thickness, high electricity costs, and an additional water treatment. Thus, the thermal treatment method is preferable in view of stability of the body or economic benefits of the operations.

**TABLE 3**

| Test Strain | Amount (ppm) | Halo (mm) | |
|---|---|---|---|
| | | Heating at 100°C | Heating at 15°C |
| *Escherichia coli* ATCC 25922 | 50 | 0.0 | 0.0 |
| | 100 | 0.0 | 0.0 |
| | 150 | 2.0 | 2.0 |
| *Staphylococcus aureus* ATCC 6538 | 50 | 0.0 | 0.0 |
| | 100 | 0.0 | 0.0 |
| | 150 | 1.0 | 2.0 |

As described above, the method of providing antibacterial activity to the body by use of the nano-sized metal particles according to the present invention, is advantageous in that the metal particles are not embedded into the body but are deposited on the surface of the body, thus increasing a sterilizing performance. Further, antibacterial activity of the body for use in home appliances is sufficiently exhibited even though small amounts of the nano-sized metal particles are used.

In addition, the method of the present invention is favorable in terms of no degradation of the external appearance of the body due to use of the volatile solution.

Further, the thermal treatment operation is performed at 50-150°C, whereby the body is not deformed, thus resulting in economic benefits.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of providing antibacterial activity to a surface of a body using nano-sized metal particles, comprising depositing the nano-sized metal particles onto the surface of the body.

2. The method of claim 1, comprising:
coating a volatile solution dispersed with nano-sized metal particles onto the surface of the body; and
thermally treating the coated body wherein the nano-sized metal particles are deposited onto the body.

3. The method according to claim 1 or 2, further comprising drying the coated body before thermally treating the body coated with the nano-sized metal particles.

4. The method according to any preceding claim, wherein the thermal treatment operation is performed at 50-150°C to prevent deformation of the body.

5. The method according to any preceding claim, wherein the thermal treatment operation is performed at 150°C to prevent deformation of the body.

6. The method according to any preceding claim, wherein the nano-sized metal particles used in the coating operation are used in an amount of 100-2000 ppm, based on the volatile solution.

7. The method according to any preceding claim, wherein the nano-sized metal particles used in the coating operation are used in the amount of 1000 ppm, based on the volatile solution.

8. The method according to any preceding claim, wherein the nano-sized metal particles have a sterilizing function.

9. The method according to any preceding claim, wherein the metal particles have a sterilizing function and are selected from the group consisting of silver (Ag), aluminum (Al), copper (Cu), iron (Fe), zinc (Zn), cadmium (Cd), palladium (Pd), rhodium (Rh) and chrome (Cr).

10. The method according to any preceding claim, wherein the metal particles have a sterilizing function and are any one selected from the group consisting of silver (Ag), aluminum (Al), copper (Cu), iron (Fe), zinc (Zn), cadmium (Cd), palladium (Pd), rhodium (Rh) and chrome (Cr).

11. The method according to any preceding claim, wherein the nano-sized metal particles have an average particle size of 500 nm or smaller.

12. The method according to any preceding claim, wherein the nano-sized metal particles have an average particle size of 300 nm or smaller.

13. The method according to any preceding claim, wherein the nano-sized metal particles have an average particle size of 3-250 nm.

14. The method according to any preceding claim, wherein the coating of the volatile solution with nano-sized metal particles onto the surface of the body comprises deposition.

15. The method according to claim 14, wherein the deposition includes an ion-adsorption reduction method, in which only silver is selectively attached onto the body by use of electrolysis of silver solution.

16. The method according to any preceding claim, wherein the body is a home appliance selected from among refrigerators, washing machines, and air conditioners.

17. The method according to any preceding claim, wherein the body is a filter for air cleaners.

18. An air cleaner comprising the filter having antibacterial activity according to the method of claim 17.
